# EUROPEAN PATENT SPECIFICATION

(11) **EP 3 616 248 B1**
(45) Date of publication and mention of the grant of the patent: **31.03.2021**
(21) Application number: 18722187.4
(22) Date of filing: 27.04.2018
(51) Int. Cl.: H01M 4/24, H01M 4/62, H01M 10/24, H01M 4/66

(54) **BATTERY COMPRISING AN ELECTRODE HAVING CARBON ADDITIVES**
BATTERIE MIT EINER ELEKTRODE MIT KOHLENSTOFFZUSÄTZEN
BATTERIE COMPRENANT UNE ÉLECTRODE AYANT DES ADDITIFS DE CARBONE

(30) Priority: 28.04.2017 GB 201706849
(43) Date of publication of application: 04.03.2020
(73) Proprietor: Zinergy UK Limited, Cambridge, Cambridgeshire CB4 1XE (GB); Zinergy Shenzhen Limited, Shenzhen, Guangdong 518101 (CN)
(72) Inventor: OZGIT, Dilek, Histon Cambridgeshire CB24 9YA (GB); HIRALAL, Pritesh, 35009 Las Palmas (ES); AMARATUNGA, Gehan A.J., Cambridge Cambridgeshire CB2 9DG (GB); NIE, Zanxiang, Shenzhen Guangdong 518101 (CN)
(74) Representative: Lupini, Stephen Antony
(86) International application number: PCT/GB2018/051139
(87) International publication number: WO 2018/197903

(56) References cited:
- WO-A1-2014/119723
- CN-A- 104 934 233
- JP-A- 2010 118 330
- JP-A- 2014 169 193
- US-A1- 2010 178 531

## Description

This invention relates to electrodes for use in batteries and supercapacitors. In particular, this invention relates to a battery comprising an electrode which comprises a carbon additive. The invention also relates to supercapacitors including such electrodes.

Electrochemical batteries are commonly used in a wide variety of industrial and consumer electronics applications. A battery typically comprises a positive electrode, or "anode", and a negatively charged electrode, or "cathode". The anode and the cathode are ionically connected by an electrolyte. The anode and the cathode are formed from dissimilar materials, such that the anode and the cathode have different electrochemical potentials. Batteries may be primary or secondary batteries. The term "primary battery" refers to a non-rechargeable battery that is configured to be used once and discarded. This is because the electrochemical reactions that occur in the battery to generate electricity are not reversible. The term "secondary battery" refers to a rechargeable battery that may be recharged, for example, by running a current through the battery. This is possible because the electrochemical reactions that occur in the battery to generate electricity are reversible.

Zinc is commonly used to form the anode of both primary and secondary batteries. Zinc may be paired with a variety of different cathode materials to form several battery types including zinc/manganese oxide batteries, zinc/silver oxide, nickel/zinc batteries, and zinc/air batteries. Zinc is a popular choice for the anode material due to its high electrode potential, low density, low overpotential, high rate discharge ability, compatibility with aqueous electrolyte and low cost.

Zinc/silver oxide batteries are particularly advantageous since they have been shown to have a particularly high power density for a rechargeable battery, a low self-discharge rate and a flat voltage discharge curve. Zinc/silver oxide batteries are also non-toxic.

As a result of these advantages, zinc/silver oxide batteries have been employed in a wide range of applications including commercial electronics and more demanding military applications.

More recently, there have been efforts to reduce the thickness of batteries, including zinc/silver oxide batteries. Methods such as lamination, printing, evaporation, sputtering and lithography are being used to create thin batteries, some of which are less than 300 micrometres thick. The low thickness can allow such thin batteries to be used for a wide range of applications for which conventional batteries are unsuitable, particularly where the thin batteries are also flexible.

However, it has been found that zinc anodes in many types of zinc battery, including zinc/silver oxide batteries, exhibit undesirable changes during repeated charging and discharging which ultimately limits the number of times the batteries can be cycled.

As used herein, the term "cycle" refers to a single charge-discharge cycle of a rechargeable battery.

During discharge of a zinc battery, zinc oxide forms and is dissolved in the electrolyte. For example, the zinc oxide may dissolve in the electrolyte in the form of zincate. The electrolyte typically comprises potassium hydroxide or sodium hydroxide. During recharging of the battery or, if the electrolyte is saturated with zinc oxide, also during discharging of the battery, zinc oxide is deposited on the anode. However, it is typically redeposited in the form of needle-like dendrites or whiskers which dramatically alter the surface morphology of the anode. As the dendrites grow, the radius of curvature of the dendrite tip becomes smaller resulting in localised current density increases where the deposition rate of zinc is higher. This can result in active material loss and penetration of dendrite through the separator between the anode and cathode resulting in a short circuit. This detrimental effect is significantly more pronounced when there is a very small separation between the anode and the cathode, which may be desirable in order to reduce the internal resistance of a battery.

Additionally, it has been found that the morphology of the zinc anode deteriorates with every cycle of charging and discharging which ultimately limits the useful life of the battery. Similar limitations have been observed in a number of other battery types including lithium batteries.

Supercapacitors are capacitors which exhibit extremely high capacitances. They generally have two electrodes separated by a separator which comprises an electrolyte. As with batteries, there have been efforts to reduce the thickness of supercapacitors, for example by reducing the thickness of the electrodes. However, many known thin supercapacitors do not perform at or close to their theoretical maximum performance due, at least in part, to under-utilisation of the electrode material.

JP 2010-118330 A describes an anode material for a lithium secondary battery and a lithium secondary battery using the anode material. A silicon-based material is used as the anode active material and a hybridized carbon nanohorn is used as a conductive agent to provide sufficient volume occupation rate of the anode active material.

CN 104934233 A describes a porous conductive graphene or carbon nanohorn composite material that can be used as an electrode material or an additive in supercapacitors, lithium ion batteries, fuel cells and the like. The composite material comprises carbon nanohorns distributed between graphene sheet layers or on the surfaces of the graphene sheet layers.

WO 2014/119723 A1 describes an electrode for a lithium secondary battery using a carbon material as a conductive agent and a lithium secondary battery using the electrode. In one example, a slurry was prepared by mixing graphite, a heat-treated carbon nanohorn conductive agent and a binder in a ratio of 92:4:4 and by using N-methylpyrrolidone as a dispersion medium. The slurry was then applied to a copper foil using a doctor blade method and dried to obtain a negative electrode.

Accordingly, it would be desirable to provide an electrode for use in both a battery and a supercapacitor with enhanced conductivity and energy storage properties, and which allows, when used in a battery, the useful life of the battery to be increased.

According to a first aspect of the present invention, there is provided a battery comprising an anode and a cathode, and an electrolyte disposed between the anode and the cathode, wherein one or both of the anode and the cathode comprises an electrode comprising a plurality of sheets of graphene and a plurality of carbon nanohorns disposed between the sheets and further comprises zinc particles that have a diameter of less than about 100 nanometres.

As used herein, the term "electrode" refers to an electrical conductor through which an electric current enters or leaves an electrolyte. Electrodes are found in a variety of electrical components including batteries, capacitors and diodes. Electrodes may be anodes or cathodes. An electrode may be connected to, or include, a current collector by which the electrical current may be conducted from the electrode to the rest of the circuit.

As used herein, the term "graphene" refer to a two dimensional allotrope of carbon having a thickness of only a single, or only a few layers of atoms. For example, "graphene" may refer to a two-dimensional allotrope of carbon having a thickness of less than 5 layers of atoms. The term includes pristine graphene, graphene with defects, and reduced graphene oxide (rGO) . Graphene exhibits high electron mobility which can be advantageous in electronics applications. In particular, including graphene in the electrode can increase the power and energy densities of such electrodes.

As used herein, "reduced graphene oxide" refers to a graphene compound formed by reducing graphene oxide. Graphene oxide is a compound comprising carbon, oxygen and hydrogen. It does not exhibit the same electrical properties as graphene. However, the electrical properties of graphene oxide may be improved by reducing it. Reduction of graphene oxide may be achieved in a number of ways as are known to the skilled person, for example by heating, exposing to hydrogen plasma or treating with hydrazine hydrate. While rGO may exhibit inferior electrical properties to pristine graphene, it is often preferred in bulk electronics applications since it is considerably less expensive to produce.

As used herein, the term "carbon nanohorn" refers to a horn shaped allotrope of carbon. Carbon nanohorns are structurally similar to graphene sheets rolled into a horn shape with a half fullerene cap at their narrow end. Carbon nanohorns are nanostructures having a length of from about 10 nanometres to about 100 nanometres and a maximum diameter at their base of from about 1 nanometre to about 10 nanometres. In preferred embodiments, the carbon nanohorns have a length of from about 20 nanometres to about 70 nanometres, more preferably from about 30 to about 50 nanometres. In preferred embodiments, the carbon nanohorns have a maximum diameter at their base of from about 2 nanometres to about 5 nanometres, more preferably from about 3 to about 4 nanometres.

It has been found that electrodes comprising a plurality of graphene sheets advantageously exhibit high energy and power densities. Without wishing to be bound by theory, this is thought be due to a combination of their high surface area and high electrical conductivity, which also results in efficient utilisation of the active material and an increase in electron and ion diffusion lengths. Such electrodes provide a large surface area for electrode-electrolyte interaction by maximising the number of particles which are in direct electrical contact with the conductive carbon matrix.

However, graphene sheets have a tendency to change morphology during processing and handling leading to restacking and realigning of the individual sheets. This restacking is thought to be due to the strong attraction between the sheets caused by Van der Waals forces. This may result in stacked agglomerations of graphene sheets, meaning the sheets are closer to one another, which ultimately reduces the active surface area of the electrode. This means electrical properties such as the specific capacitance and energy density of electrodes comprising a plurality of graphene sheets may fall well below the theoretical values.

It has been found that the addition of carbon nanohorns between the graphene sheets advantageously reduces the propensity of the graphene sheets restack or agglomerate. This increases the active surface area of the electrode which is in contact with an electrolyte. This in turn advantageously improves the electrical properties of the electrode such as the capacitance, the power density and the conductivity of the electrode. The carbon nanohorns have been found to be effective at separating the graphene sheets and reducing restacking whilst still being small enough to be intercalated between the graphene sheets.

Moreover, carbon nanohorns themselves have a very high surface area which further contributes to the overall surface area of the electrode and promotes improved electrode-electrolyte interaction.

Each carbon nanohorn is preferably formed from graphene or graphite.

The plurality of carbon nanohorns may be arranged individually between adjacent graphene sheets. For example, by isolating individual carbon nanohorns by sonication. Alternatively, or in addition, the plurality of carbon nanohorns may be arranged in a plurality of carbon nanohorn agglomerates.

Carbon nanohorn agglomerates are clusters of carbon nanohorns having a diameter of from about 20 nanometres to about 160 nanometres. Typically, the individual nanohorns are connected to one another at their larger diameter end in the centre of the agglomerate and project outwards in multiple directions. A single carbon nanohorn agglomerate may comprise thousands or tens of thousands of individual carbon nanohorns.

Advantageously, by providing the plurality of carbon nanohorns in the form of a plurality of carbon nanohorn agglomerates, the sheets of graphene may be separated regardless of the orientation of the individual carbon nanohorns. This is down to the zero dimensionality of the nanohorn agglomerates. Indeed, it has been found that carbon nanotubes, which are essentially one dimensional, are less effective at preventing restacking of the graphene sheets than the zero dimensional nanohorn agglomerates. Additionally, the provision of carbon nanohorns arranged in agglomerates further increases the surface area of the electrode since the carbon nanohorn agglomerates themselves have a very high surface area.

As used herein, the term "diameter" refers to the largest dimension of a given carbon nanohorn agglomerate.

In preferred embodiments, the plurality of carbon nanohorn agglomerates have a diameter of from about 60 nanometres to about 120 nanometres, more preferable from about 50 nanometres to about 80 nanometres.

Carbon nanohorn agglomerates with a diameter within this range have been found to be particularly effective at separating the graphene sheets and reducing restacking whilst still being small enough to be intercalated between the graphene sheets.

The plurality of sheets of graphene may comprise any suitable type or types of graphene. Preferably one or more of the plurality of sheets of graphene is a sheet of reduced graphene oxide (rGO). In preferred embodiments, all, or substantially all of the sheets of graphene in the electrode are sheets of reduced graphene oxide.

The provision of electrodes comprising rGO has been found to result in high levels of energy and power densities, while still being cost effective to manufacture.

Preferably, one or more of the plurality of sheets of graphene has a specific surface area of greater than about 200 m²/g, preferably greater than about 500 m²/g. Preferably, one or more of the plurality of sheets of graphene has a specific surface area of between about 200 m²/g and about 2600 m²/g, preferably between about 500 m²/g and about 2200 m²/g. In preferred embodiments, all, or substantially all of the sheets of graphene in the electrode have a specific surface area of greater than about 500 m²/g.

As used herein, the term "specific surface area" refers to the surface area of the two dimensional carbon material per unit mass, for example as measured using nitrogen isotherms in the Brunauer-Emmett-Teller technique as set out in ISO 9277:2010.

The provision of electrodes comprising sheets of graphene having a specific surface area within these ranges advantageously allows for greater interaction between the electrode and an electrolyte which in turn may increase the performance of the electrode, without resulting in too many pores which can cause the conductivity to decrease.

Electrodes according to the invention comprise a plurality of sheets of graphene and a plurality of carbon nanohorns. Preferably, the ratio of the mass of the plurality of carbon nanohorns to the mass of the plurality of graphene sheets in the electrode is between about 0.25 and about 0.5, more preferably between about 0.3 and about 0.4. Most preferably, the mass ratio of the plurality of carbon nanohorns to the plurality of sheets of graphene is about 1:3. As discussed further below, this ratio has been found to be particularly effective in improving several electrical properties of devices comprising such electrodes including the coulombic efficiency, voltage efficiency, cyclic life and energy density.

The electrode may further comprise one or more additives that improve the function or facilitate the fabrication of the electrode. For example, the electrode may further comprise a binder within which the plurality of sheets of graphene and the plurality of carbon nanohorns are held. The binder may be any suitable binder. Preferably, the binder comprises at least one of polytetrafluoroethylene (PTFE), Styrene-Butadiene Rubber, ethylcellulose or Polyvinylidene Fluoride. For example, the binder may comprise PTFE in dionised water. Where the electrode further comprises a binder, the electrode may comprise any suitable amount of binder. In certain embodiments, the electrode comprises about 5 weight percent of binder. In such embodiments, the 5 weight percent of binder may consist of 2 weight percent PTFE in dionised water. In certain embodiments, the electrode comprises about 5 weight percent carbon nanohorns and 5 weight percent of binder. The remainder of the electrode may be made up of the active material, such as zinc.

The electrode may also include other forms of nanocarbons in addition to the plurality of carbon nanohorns. For example, the electrode may further comprise a plurality of fullerenes and/or a plurality of carbon nanotubes disposed between adjacent graphene sheets. The electrode may also include other nanoparticles, such as bismuth oxide, CaOH2, or indium oxide. When used in a zinc battery, such oxides may help to supress hydrogen evolution. When used in supercapacitors, such oxides may increase capacitance through the process of pseudocapacitance.

As mentioned above, several types of battery including zinc and lithium batteries exhibit detrimental metal oxide dendrite growth, for example at the anode during repeated charge-discharge cycles. This disrupts the surface morphology of the anode and can limit the useful life of the battery.

It has been found that batteries according to the first aspect of the invention exhibit enhanced properties including increased capacity over a greater number of cycles of charging and discharging where the battery is a secondary battery. This increase in performance is thought to be due to an increased surface area which provides an effective conductive network even after several charge and discharge cycles. Additionally, the provision of electrodes according to the first aspect in the battery may result in less dendritic precipitation of the metal oxide generated from the metal or alloy component over cycles of charging and discharging. This is thought to be due to there being a large number of nucleation sites which leads to a high nucleation density. This may in turn reduce the size of the individual dendrites nucleated. Reducing the size of the dendrites is advantageous since their formation limits the battery performance and the number of cycles possible.

As mentioned above, the provision of a plurality of carbon nanohorns between the sheets of graphene advantageously prevents restacking of the sheets and consequently helps to maintain a large surface area.

Synergistically, it has been found that the elastic nature of graphene sheets in the electrode may improve the adherence of the one or more carbon nanohorns to the metal or alloy component in the battery and thus ensures the integrity of the battery.

The electrolyte may be any suitable electrolyte. The electrolyte may comprise a salt, more particularly a neutral salt. For example the electrolyte may comprise at least one of potassium salts, sodium salts, or lithium salts. The electrolyte may comprise a solvent. For example the electrolyte may comprise water. Preferably the electrolyte comprises an aqueous solution of potassium hydroxide. Alternatively, or in addition, the electrolyte may comprise NaOH, or other alkalis, H2SO4, HCl, or other acids, for example. Where the electrode is intended for use in a supercapacitor, the electrode may comprise Tetraethylammonium tetrafluoroborate (TEABF4) in propylene carbonate or in acetonitrile. The electrolyte may be an ionic liquid.

Preferably the anode comprises the electrode described in the first aspect of the invention.

There is also described an electrode comprising a plurality of sheets of graphene and a plurality of carbon nanohorns disposed between the sheets. The electrode may be an anode or a cathode and may further comprise a metal or alloy component. Furthermore, the electrode may comprise any of the features of the electrode of the first aspect of the invention described above.

According to the invention, the metal or alloy component in the electrode comprises particles that have a diameter of less than 100 nanometres.

It has been found that the provision of the metal or alloy component of at least one of the anode and cathode comprising particles that have a diameter of less than about 1 micrometre advantageously reduces the size of the dendrites formed during repeated cycles of charging and discharging of the battery, particularly when used in combination with the graphene sheets and carbon nanohorns of the present invention. This is thought to be due to the fact that the small size of the particles provides an increased number of nucleation sites which leads to increased nucleation density. This, in turn reduces the size of the dendrites nucleated. This is advantageous since it maintains a favourable electrode morphology for a greater number of cycles. It is also thought that such particles are less soluble in the electrolyte in the first place.

The metal or alloy component may comprise any suitable metal or alloy. For example, the metal or alloy component may comprise at least one of zinc, lithium, cobalt, manganese, iron, nickel, copper, and aluminium. Preferably the metal or alloy component comprises zinc or lithium.

The provision of the metal or alloy component comprising zinc is advantageous since zinc exhibits relatively high electrode potential, low weight, low overpotential and high rate discharge ability. Zinc is also suitable for use in secondary batteries and is compatible with aqueous electrolyte.

Zinc is used as the electrode material in a number of both primary and secondary batteries. For example, zinc may be used in zinc/manganese oxide batteries, zinc/silver oxide, nickel/zinc batteries, zinc/air batteries, zinc/bromine batteries, and zinc/cerium batteries. Preferably, the battery is a zinc/silver oxide battery.

As noted above, the ratio of the mass of the plurality of carbon nanohorns to the mass of the plurality of graphene sheets in the electrode is from about 0.25 to about 0.5, more preferably from about 0.3 to about 0.4, most preferably about 1:3. In addition to this, the preferred ratio of the mass of the metal, alloy, or oxide component to the combined mass of the plurality of carbon nanohorns and the plurality of graphene sheets is from about 85:15 to about 99:1, most preferably about 20:1. In certain preferred embodiments, the electrode comprises a plurality of carbon nanohorns, a plurality of sheets of graphene, and a plurality of metal or alloy nanoparticles in a mass ratio of 1:3:80.

Preferably, the electrode described above is an anode. That is to say, the anode preferably comprises a plurality of sheets of graphene and a plurality of carbon nanohorns disposed between adjacent sheets. The anode also comprises an active material, such as zinc.

This provision is advantageous since it has been found that such anodes may have a particularly high power density. As mentioned above, this is thought to be down to a combination of the high surface area of the carbon nanohorns themselves and their effectiveness as spacers in preventing restacking of the sheets of graphene.

The anode may further comprise additional components, such as a metal or alloy component. For example, the additional components may comprise any typical anode material used in batteries. Where the battery is a zinc/silver oxide battery, the anode comprises zinc. Preferably, the additional components are provided as a powder. Preferably, the additional components have a diameter of less than 50 micrometres, more preferably less than 1 micrometre.

Preferably, the electrode described above is a cathode. That is to say, the cathode preferably comprises a plurality of sheets of graphene and a plurality of carbon nanohorns disposed between adjacent sheets.

This provision is advantageous since it has been found that such cathodes may have a particularly high power density. As mentioned above, this is thought to be down to a combination of the high surface area of the carbon nanohorns themselves and their effectiveness as spacers in preventing restacking of the sheets of graphene.

The cathode may further comprise additional components, such as a metal or alloy component. For example, the additional components may comprise any typical cathode material used in batteries. The metal or alloy component may comprise lithium. Where the battery is a zinc/silver oxide battery, the cathode additionally comprises silver oxide. The silver oxide may be monovalent (Ag₂O). The silver oxide may be divalent (AgO). Preferably, the silver oxide is monovalent since it more stable than divalent silver oxide and has a single step flat discharge curve. In some circumstances, divalent silver oxide may be preferred since it has a higher theoretical capacity.

Preferably, the additional components of the cathode are provided as a powder. Preferably, the additional components have a diameter of less than 50 micrometres, more preferably less than 1 micrometre.

There is also described a supercapacitor. The supercapacitor comprises a first electrode and a second electrode. One or both of the first electrode and the second electrode is an electrode as described above.

Supercapacitors having electrodes comprising a plurality of sheets of graphene are found to exhibit promising electrical properties including high capacitance and high conductivity. However, as with the battery, the capacitance observed would often fall below the theoretical maximum values. This is thought to be due to restacking of the sheets of graphene which reduces the active surface area of the electrode.

It has been found that supercapacitors further comprising a plurality of carbon nanohorns disposed between adjacent sheets exhibit a lower resistivity and a higher capacitance. This is at least in part due to the effective conductive network made between the graphene sheets and the carbon nanohorns disposed between the sheets, as well as due to the increased porosity which results from spacing out of the graphene sheets. Additionally, as previously mentioned, the carbon nanohorns advantageously help prevent the graphene sheets from restacking, maximising the active surface area of the electrode.

Optionally the second electrode may differ in structure from the first electrode. In this case, the supercapacitor may be considered an asymmetrical supercapacitor. For example, the second electrode may be provided without a plurality of graphene sheets and/or carbon nanohorns.

Alternately, both the first electrode and the second electrode may be an electrode as described above. In this case, the supercapacitor may be considered a symmetrical supercapacitor.

The supercapacitor may further comprise a separator disposed between the first electrode and the second electrode. The separator may comprise any suitable separator. For example, the separator may comprise a sheet of polypropylene, cellophane, polyethylene, or cellulose, for example paper.

The supercapacitor further comprises an electrolyte disposed between the first electrode and the second electrode. The electrolyte may be any suitable electrolyte. The electrolyte may be a liquid electrolyte, or a gel electrolyte, for example a polyethylene oxide gel electrolyte. Preferably, the electrolyte comprises at least one of tetraethylammonium tetrafluoroborate and propylene carbonate. Alternatively, or in addition, the electrolyte may comprise NaOH, or other alkalis, H2SO4, HCl, or other acids. The electrode may comprise 1 M Tetraethylammonium tetrafluoroborate (TEABF4) in propylene carbonate or in acetonitrile. The electrolyte may be an ionic liquid.

According to a second aspect of the invention, there is provided a conductive ink for forming an electrode of a battery according to any one of the example batteries described above, the conductive ink comprising an active material, a binder, a solvent, a plurality of graphene sheets and a plurality of carbon nanohorns and further comprising zinc particles that have a diameter of less than about 100 nanometres.

Any feature in one aspect of the invention may be applied to other aspects of the invention, in any appropriate combination. Furthermore, any, some and/or all features in one aspect can be applied to any, some and/or all features in any other aspect, in any appropriate combination.

It should also be appreciated that particular combinations of the various features described and defined in any aspects of the invention can be implemented and/or supplied and/or used independently.

The invention will be further described, by way of example only, with reference to the accompanying drawings in which:
Figure 1 is a schematic illustration of the structure of an electrode according to an embodiment of the invention;
Figure 2 is a schematic illustration of the structure of a carbon nanohorn agglomerate as used in the electrode shown in Fig. 1;
Figure 3 is a schematic illustration of the structure of an anode of a battery according to another embodiment of the invention;
Figure 4 is an exploded illustration of a battery according to another embodiment of the invention;
Figure 5 is a schematic illustration of the structure of a supercapacitor according to yet another embodiment of the invention;
Figures 6A-C are a series of charge/discharge curves of a series of batteries, one of which is according to the invention;
Figure 7 is a graph showing how the normalised specific capacity retention varied with the number of cycles for a series of batteries, some of which are according to the present invention.
Figure 8 is a graph showing cyclic voltammograms for a series of batteries, one of which is according to the present invention.
Figure 9A-D is a series of micrographs showing the morphology of the anode of a series of batteries following a number of charge and discharge cycles.
Figure 10A-C is a series of graphs showing how a series of parameters varies as a function of the number of cycles for a variety of different batteries.
Figure 11 is a graph showing the resistivity as a function of the voltage for a series of different electrode materials for use in a supercapacitor or as a current collector.
Figures 12A-D is a series of graphs showing various parameters of two supercapacitors, one of which is according to the present invention.

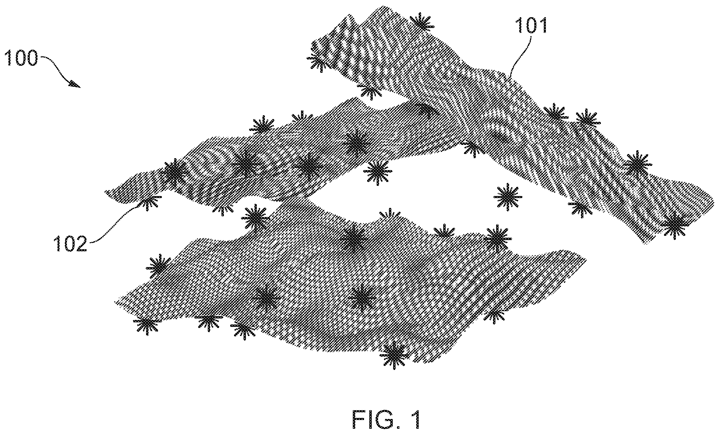

Figure 1 is a schematic illustration of the nanostructure of an electrode 100 according to an embodiment of the present invention. The electrode 100 comprises a plurality of sheets of graphene. In this example, the plurality of sheets comprises a plurality of sheets 101 of rGO. The electrode 100 further comprises a plurality of carbon nanohorn agglomerates 102 disposed between the rGO sheets 101. The carbon nanohorn agglomerates 102 separate the sheets of rGO 101. The rGO sheets 101 are separated by between 1 nanometre and 5 nanometres by the carbon nanohorn agglomerates 102. In this example, the mass ratio of carbon nanohorn agglomerates 102 to rGO sheets 101 in the electrode is about 1:3. The electrode 100 further comprises a binder (not shown) within which the rGO sheets 101 and the carbon nanohorn agglomerates 102 are held. For example, the electrode 100 may comprise 5 weight percent PTFE which acts as the binder.

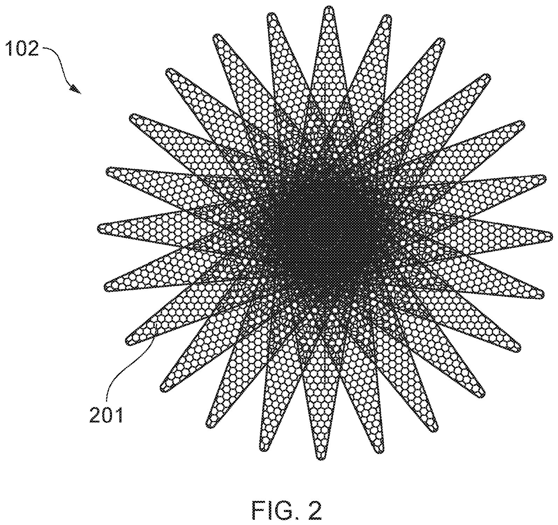

Figure 2 is a schematic illustration of the nanostructure of a single carbon nanohorn agglomerate 102. The carbon nanohorn agglomerate comprises a plurality of individual carbon nanohorns 201. Each of the plurality of carbon nanohorns 201 has a cone-like structure resembling a sheet of graphene that has been rolled up to form a horn. Unlike carbon nanotubes, each of the plurality of carbon nanohorns narrows to a point at one end and is closed at the narrow end by a half fullerene cap. Each of the plurality of carbon nanohorns 201 has a wide end that opposes its narrow end. Each carbon nanohorn agglomerate 102 comprises a plurality of carbon nanohorns 201 joined at their wide ends such that the plurality of carbon nanohorns 201 project radially from the centre of the carbon nanohorn agglomerate 102.

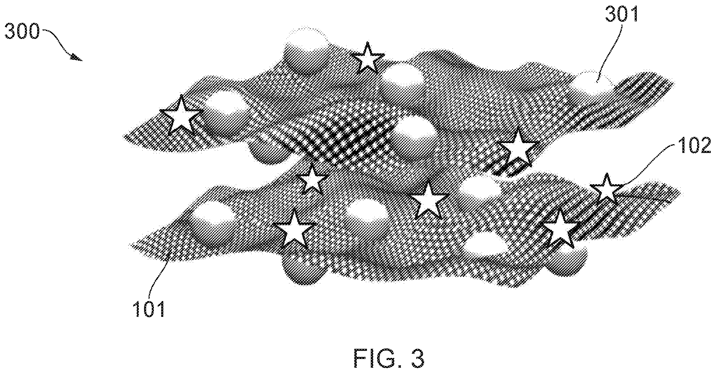

Figure 3 is a schematic illustration of the nanostructure of an anode 300 of a battery according to another embodiment of the present invention. The anode 300 comprises a plurality of rGO sheets 101 with a plurality of carbon nanohorn agglomerates 102 disposed between the rGO sheets 101. The nanostructure of the anode 300 further comprises a plurality of zinc particles 301 embedded amongst the carbon components. The zinc particles 301 have a diameter of less than 50 nanometres. The mass ratio of carbon nanohorn agglomerates 102 to rGO sheets 101, to zinc nanoparticles 301 in the anode 300 is about 1:3:80.

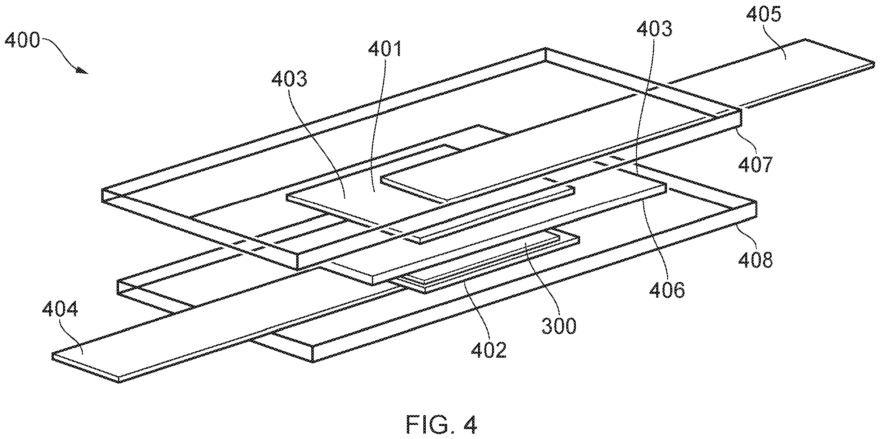

Figure 4 shows a schematic illustration of a battery 400 according to another embodiment of the invention. In this example, the battery 400 is a zinc/silver oxide secondary battery. The battery 400 comprises an anode 300 having the nanostructure shown in Figure 3, and a cathode 401. The cathode 401 is an electrode according to the embodiment of Figure 1 and further comprises a plurality of particles of silver oxide powder. The silver oxide particles range in diameter from about 1 micrometre to about 10 micrometres . In this example, the silver oxide used in the silver oxide powder is monovalent silver oxide (Ag₂O) although it will be understood that other types of silver oxide may be used.

Both the anode 300 and the cathode 401 are connected to separate graphite plates, 402 and 403 respectively. The graphite plates provide an electrically conductive support for each of the electrodes. The graphite plates 402 and 403 are about 0.5 millimetres thick. The graphite plates 402, 403 are not essential to the functioning of the battery but may help to increase robustness and provide a simple means by which the anode and cathode may be electrically connected to the rest of the battery. The graphite plates act as an electrically conductive interface between the electrodes and the current collectors, discussed below. In other examples, the graphite plates may be replaced, for example, with a printed carbon ink substrate.

The graphite plates 402 and 403 are connected to two separate current collectors 404 and 405 respectively. The current collectors 404 and 405 are each made from a conductive foil. In this example, the conductive foil is formed from copper foil of about 0.8 millimetres thick, although it will be understood that other materials and/or thicknesses of foil may be used. In use, the current collectors 404 and 405 are connected to an electrical load.

The battery 400 further comprises a separator 406 disposed between and abutting both the anode 300 and the cathode 401. The separator 406 is a piece of cellulose paper. In this example, the cellulose paper is about 180 micrometres thick but can be thinner, for example about 15 micrometres thick. The separator 406 is soaked in electrolyte. In this battery 400, the electrolyte comprises an aqueous solution or potassium hydroxide. In other examples, the separator and electrolyte combination can be substituted by a polymer electrolyte.

The battery 400 further comprises an optional structural component 407 and 408, or casing, between which the other components of the battery 400 are sandwiched to provide rigidity. The structural component may be arranged to enclose the other components of the battery 400. This may help to prevent the electrolyte from drying out.

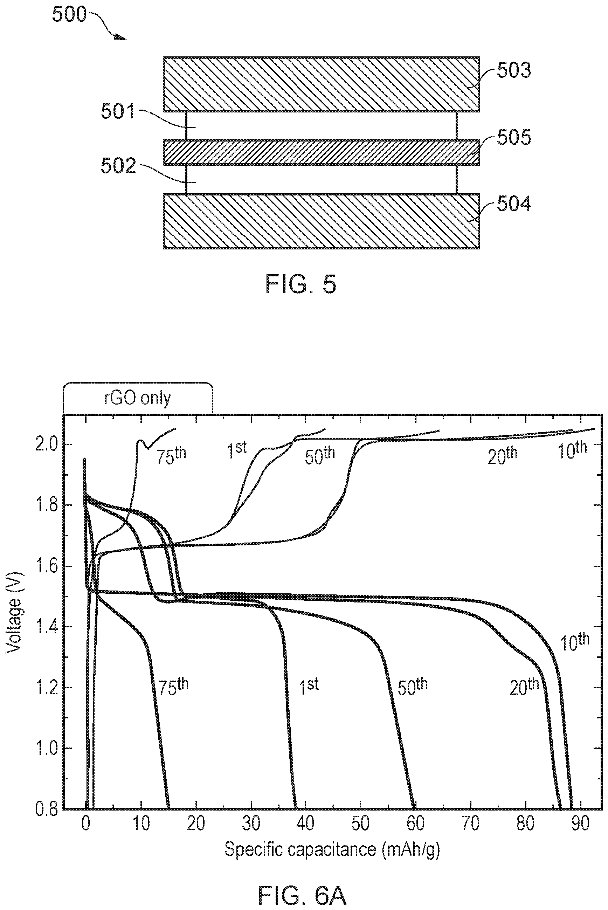

Figure 5 is a schematic illustration of the structure of a supercapacitor 500 according to yet another embodiment of the present invention. The supercapacitor 500 comprises two electrodes 501 and 502, both of which have the nanostructures shown in Figure 1.

The supercapacitor 500 further comprises two current collectors 503 and 504 attached to each of the electrodes 501 and 502 respectively. The current collectors 503 and 504 are formed from aluminium and are coated with graphite on the side onto which the electrodes 501 and 502 are attached. In this example, the electrodes 501, 502 are printed onto the current collectors 503, 504 in the form of a graphene ink. The graphene ink comprises about 15 weight percent rGO sheets, about 10 weight percent carbon nanohorns, about 5 weight percent binder, with isopropanol (IPA) used as a thinner. When the graphene ink dries, the IPA evaporates off, leaving the rGO sheets, carbon nanohorns and binder.

The supercapacitor 500 further comprises a separator 505 between and abutting both of the electrodes. The separator 505 is a piece of cellulose paper. In this example, the cellulose paper is about 180 micrometres thick but could be thinner, for example about 15 microns. The separator 505 is soaked in electrolyte. In this supercapacitor 500, the electrolyte comprises tetraethylammonium tetrafluoroborate (TEABF4) and propylene carbonate.

Experimental data were collected to determine the performance of a variety of batteries and supercapacitors, some of which were according to the present invention.

Batteries according to the present invention were produced using the following method.

Carbon nanohorn agglomerates were obtained by rapid condensation of carbon atoms without any catalyst. The resulting individual carbon horns had an average diameter of between about 3 nanometres and about 5 nanometres and an average length of between about 30 nanometres and about 50 nanometres. The resulting carbon nanohorn agglomerates had a diameter of between about 60 nanometres and about 120 nanometres.

Sheets of rGO were obtained by reducing graphene oxide using the following method. Graphene oxide was prepared using a modified Hummers method. The graphene oxide was then reduced by a thermal reduction method. Dry graphene oxide flakes were rapidly heated on a hot plate to about 350°C causing a rapid reduction reaction which produces rGO. 1 gram of dry graphene oxide flakes yields about 0.33 grams or rGO. During the reduction reaction, the functional groups of the graphene oxide are removed to produce CO₂, CO and H₂O gases. The evolution of these gases exfoliate GO and results in very low density rGO sheets. Although oxygen functional groups are partially removed after reduction, 10 % of the total carbon atoms are also lost in the form of gas, resulting in vacancies in the structure. rGO produced by this method has a specific surface area of between about 500 m²/g and about 1200 m²/g.

The anode material for the battery was formed by combining zinc particles having a diameter of less than 50 nanometres with the carbon nanohorns and the sheets of rGO. The preferred ratio of the mass of the metal, alloy, or oxide component to the combined mass of the plurality of carbon nanohorns and the plurality of graphene sheets is from about 85:15 to about 99:1, most preferably about 20:1. The ratio of rGO to carbon nanohorns was varied in some of the batteries discussed below. In addition, 5 weight percent of polytetrafluoroethylene solution was added to the mixture to act as a binder. The resulting mixture was in the form of a paste. The paste was then spread over a first graphite plate having an area of 1 centimetre squared and a thickness of 0.5 millimetres, then dried at ambient temperature for 24 hours. It will be understood that plates having other dimensions may also be used.

The cathode material for the battery was formed by combining silver oxide particles having a diameter of between about 1 micrometre and about 5 micrometres with at least one of the carbon nanohorns and the sheets of rGO. The mass ratio of carbon nanohorns to rGO was 1:3. As with the anode, in addition, 5 weight percent of polytetrafluoroethylene solution was added to the mixture to act as a binder. The resulting mixture was in the form of a paste. The paste was then spread over a second graphite plate having an area of 1 centimetre squared and a thickness of 0.5 millimetres, then dried at ambient temperature for 24 hours.

The components were assembled into the battery shown in Figure 4 by sandwiching an electrolyte-soaked cellulose separator (Whatman (RTM), Grade 1 paper of around 180 microns thick, available from Sigma-Aldrich) between the two dried electrodes. Double-sided copper tape ("1182" tape of around 0.8 mm thick, available from 3M) was used as the current collectors, and glass slides were placed on either sides of the assembly for rigidity. The whole structure was sealed in polypropylene films to prevent drying of the electrolyte and pressed using a spring loaded compressor with a pressure of about 0.098 MPa.

The charge and discharge curves of various batteries after a different number of charge and discharge cycles were then determined. For each of the batteries, the composition of the anode was varied to study the effects of this on the performance of the battery. The composition and structure of the cathode was the same for each battery and included 5 weight percent rGO as a conductive additive.

Figure 6A is a charge/discharge curve for a battery made using the above process, wherein the only carbon additive to the anode is rGO, carbon nanohorns have not been added to the anode.

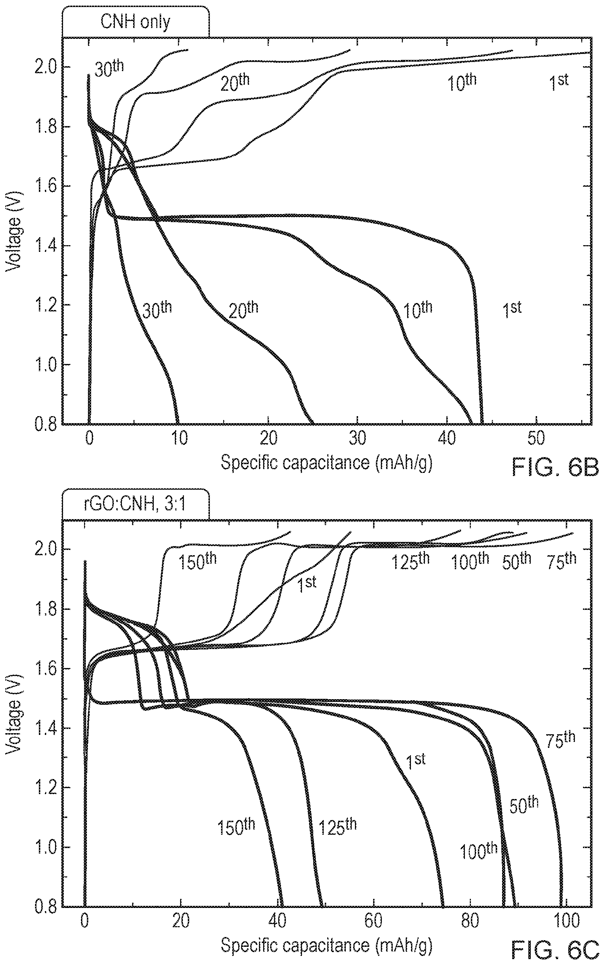

Figure 6B is a charge/discharge curve for a battery wherein the only carbon additive to the anode is carbon nanohorns, rGO has net been added to the anode.

Figure 6C is a charge/discharge curve for a battery in which carbon nanohorns and rGO are both added to the anode in a mass ratio of rGO to carbon nanohorns of 3:1.

From the discharge curves, we can determine how constant the voltage is throughout a discharge. Preferably, the batteries will have a constant voltage over a range of time, this indicates a long period of useful battery life.

As can be seen from Figure 6A, the battery with an anode comprising rGO but no carbon nanohorns exhibits a reasonably flat portion during the 1st, 10th, 20th and 50th cycle. However, by the 75th cycle, the curve does not plateau at all, indicating that the battery exhibits no constant voltage section in its discharge regime.

As can be seen from Figure 6B, the battery with an anode comprising carbon nanohorns but no rGO exhibits considerably shorter plateaus for the 1st and 10th cycles (note that the specific capacity scale is considerably larger than those in Figures 6A and 6C). This indicated a very short useful life of the battery even on its 1st discharge. By the 20th discharge, the graph does not exhibit a plateau at all indicating that the battery does not have a period of constant voltage at all during its 20th discharge. This poor performance is thought to be the high degree of polarisation observed in the carbon nanohorn agglomerates which could be due to their effective zero dimensionality which is ineffective in creating a three dimensional conductive network around the metal or alloy component. This may result in a lack of contact between the carbon nanohorns and the metal or alloy component and a high internal resistance.

As can be seen from Figure 6C, the battery with an anode comprising rGO and carbon nanohorns in a mass ratio of 3:1 exhibits significantly longer periods of constant voltage than either of the other two batteries for all of the comparable cycles. Moreover, it was surprisingly found that while the rGO only battery lost its constant voltage period after 75 cycles and the carbon nanohorn only battery lost its constant voltage period after 20 cycles, the battery according to the present invention still maintained a constant voltage period in the 150th discharge therefore performing significantly better than either of the other two batteries.

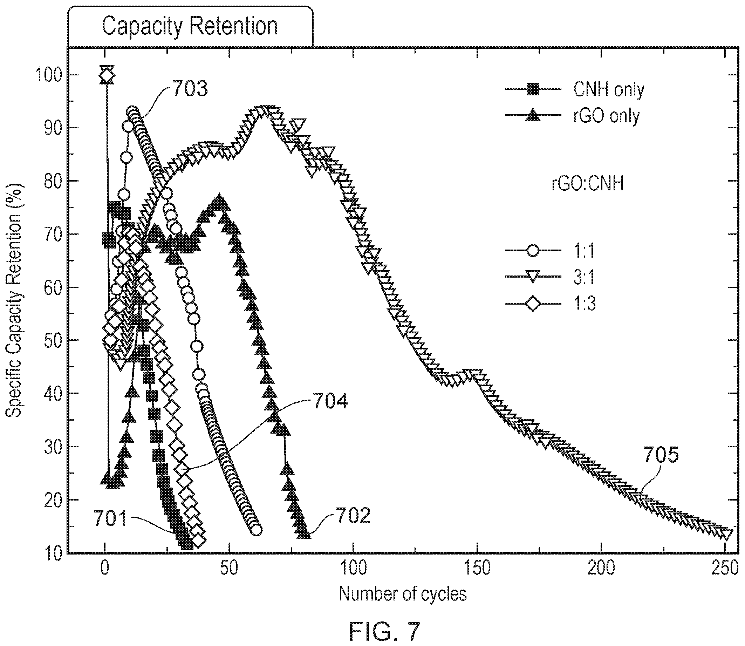

The percentage capacity retention was also measured as a function of the number of cycles for several different batteries including some according to the present invention. Figure 7 shows the results of this study.

Curve 701 corresponds to a battery wherein the only carbon additive to the anode are carbon nanohorns, rGO has not been added to the anode.

Curve 702 corresponds to a battery wherein the only carbon additive to the anode is rGO, carbon nanohorns have not been added to the anode.

Curve 703 corresponds to a battery in which carbon nanohorns and rGO are both added to the anode in a mass ratio of rGO to carbon nanohorns of about 1:1.

Curve 704 corresponds to a battery in which carbon nanohorns and rGO are both added to the anode in a mass ratio of rGO to carbon nanohorns of about 1:3.

Curve 705 corresponds to a battery in which carbon nanohorns and rGO are both added to the anode in a mass ratio of rGO to carbon nanohorns of about 3:1.

We can see from curve 701 that the battery comprising an anode comprising carbon nanohorns and no rGO performs particularly poorly. The battery does not make it through 50 cycles before its capacitance drops to around 10 percent of its starting capacity.

Curves 703 and 704 show that batteries whose anodes comprise both rGO and carbon nanohorns in mass ratios of 1:1 and 1:3 respectively. It is clear that both of these perform slightly better than the battery whose anode comprises no rGO (curve 701). Of the two, the battery comprising the lower proportion of carbon nanohorns (curve 703) performs best.

This apparent trend continues since the battery whose anode comprises rGO but no carbon nanohorns (curve 702) retains a greater percentage of its capacity for a greater number of cycles than either of the batteries represented by curves 703 and 705.

However, as the graph shows, it was surprisingly found that batteries comprising both rGO and carbon nanohorns in a mass ratio of 3:1 retains a far larger percentage of its capacity for a far greater number of cycles (curve 705). Indeed, this battery is able to sustain about 250 cycles before its capacity drops to below 10 percent of its starting capacity, this is about three times more cycles than the battery that's anode comprises no carbon nanohorns at all.

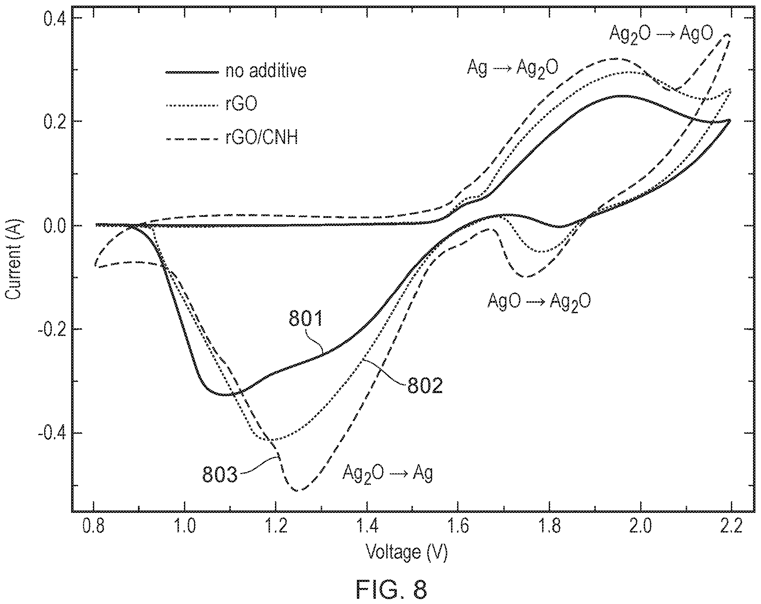

The current was measured as a function of voltage for three different zinc/silver oxide batteries. Figure 8 shows the results of this study.

Curve 801 corresponds to a battery where the anode does not comprise any conductive additive (no rGO and no carbon nanohorns).

Curve 802 corresponds to a battery where the anode comprises rGO and no carbon nanohorns.

Curve 803 corresponds to a battery where the anode comprises both rGO and carbon nanohorns in a mass ratio of 3:1.

For all three of the curves, two oxidation peaks are observed. These correspond to oxidation from Ag to Ag₂O and oxidation from Ag₂O to AgO. On the reverse scan, first AgO was reduced to Ag₂O and then to Ag. The sharp increase in current where Ag converted into Ag₂O was due to the formation of fresh zinc nuclei, and the further increase of the available deposition area.

By comparing the three curves, it is clear that the addition of rGO to the anode increased the magnitude of the oxidation and reduction peaks. It is also clear that the addition of carbon nanohorns further increased the magnitude of the oxidation and reduction peaks. The magnitude of the oxidisation and reduction peaks is considered an indicator of how efficiently the anode material is being utilised. The larger the magnitude of the oxidisation and reduction peaks, the better the utilisation of the anode material. This graph therefore suggests that the addition of carbon additives, and in particular the addition of both rGO and carbon nanohorns results in superior utilization of the anode material.

Additionally, the Figure 8 shows that the potential difference between the oxidation and reduction peaks is smaller in the battery wherein the anode comprises rGO compared to the battery wherein the anode does not contain rGO or carbon nanohorns. Moreover, the battery wherein the anode comprises both rGO and carbon nanohorns exhibits oxidation and reduction peaks that have an even smaller potential difference between them.

The potential difference between oxidation and reduction peaks is an indication of the reversibility of the electrode reaction, that is to say, the smaller the potential difference between the peaks, the better the reversibility will be. Therefore, the reversibility of the batteries increased with the addition of the carbon additives

Additionally, Figure 8 shows that the batteries with more carbon additives exhibit oxidation and reduction peaks that are sharper and more symmetrical. This is due to the electrochemical reactivity of the carbon additives in the electrodes.

To determine the microstructure of the anodes of batteries following a series of charging and discharging cycles, a number of batteries, some of which were according to the present invention, were charges to 2.05 V and discharged to 0.8 V at a constant current of 20 mA. This was done a number of times before the battery was disassembled, the anode cleaned and then inspected using a scanning electron microscope. In all the images, the scale bar is 1 micrometre.

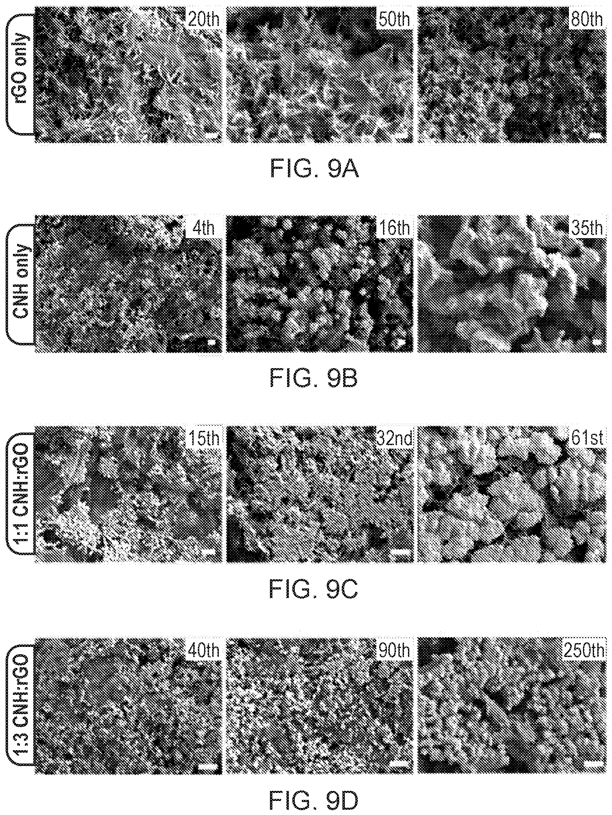

Figure 9A shows the microstructure of a battery anode comprising rGO but no carbon nanohorns after 20, 50 and 80 cycles.

Figure 9B shows the microstructure of a battery anode comprising carbon nanohorns but no rGO after 4, 16 and 35 cycles.

Figure 9C shows the microstructure of a battery anode according to the invention wherein the mass ratio of rGO to carbon nanohorns is 1:1 after 15, 32 and 61 cycles.

Figure 9D shows the microstructure of a battery anode according to the invention wherein the mass ratio of rGO to carbon nanohorns is 1:3 after 40, 90 and 250 cycles.

Figure 9A shows significant zinc oxide dendrite formation after just the 20th cycle in anodes that do not comprise any carbon nanohorns. By the 80th cycle, the dendrites have grown to approximately 500 nanometres long.

The anode comprising carbon nanohorns but no rGO developed more compact, flower like dendrites after the 16th cycle (see Figure 9C). The surface of this anode was completely passivated by the zinc oxide dendrites at the end of the 35th discharge due to the limited surface area provided by the carbon nanohorns compared to that of the rGO.

The anode comprising both rGO and carbon nanohorns in a mass ratio of 1:1 performed better but was still completely passivated by the zinc oxide dendrites at the end of the 61st discharge. In this case, the dendrites were thicker and between about 1 and 2 micrometres in length.

By contrast, the micrographs in Figure 9D shows that dendrite formation was suppressed in batteries where the anode comprises rGO and carbon nanohorns in a mass ratio of 3:1. After the 90th cycle, the length of the dendrites was no more than 200 nanometres. Furthermore, Figure 9D shows that after the 250th cycle, there are still zinc particles on the rGO surface with no obvious dendrite formation. There is also spare rGO surface left over for additional nucleation.

The coulombic, voltage, and energy densities of a series of batteries was measured over 200 cycles at a constant current of 20 mA.

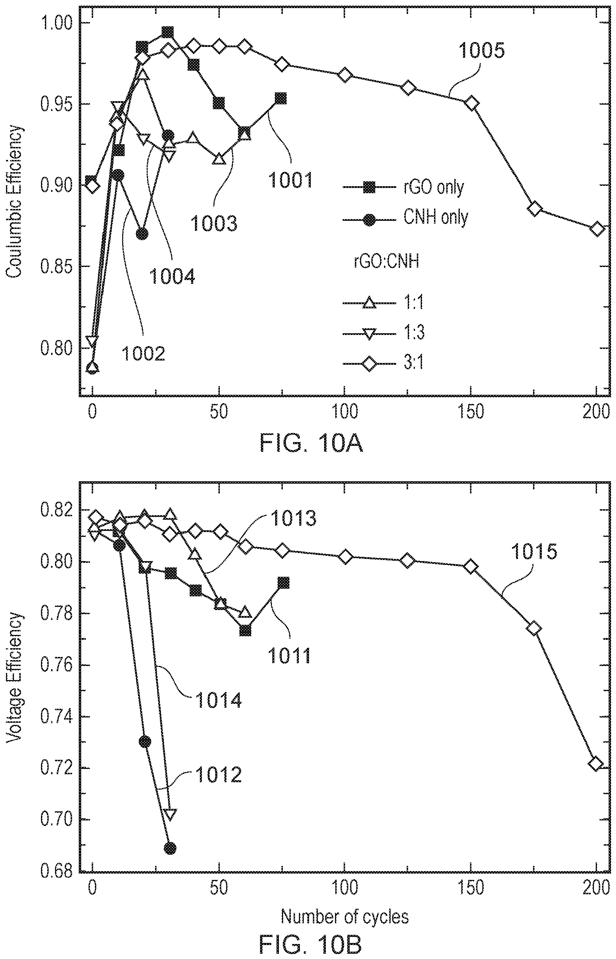

Figure 10A shows the coulombic efficiency of a series of batteries over 200 cycles. Line 1001 corresponds to the coulombic efficiency of a battery wherein the anode comprises rGO but no carbon nanohorns. Line 1002 corresponds to the coulombic efficiency of a battery wherein the anode comprises carbon nanohorns but not rGO. Line 1003 corresponds to the coulombic efficiency of a battery according to the present invention wherein the mass ratio of rGO to carbon nanohorns in the anode is 1:1. Line 1004 corresponds to the coulombic efficiency of a battery according to the present invention wherein the mass ratio of rGO to carbon nanohorns in the anode is 1:3. Line 1005 corresponds to the coulombic efficiency of a battery according to the present invention wherein the mass ratio of rGO to carbon nanohorns in the anode is 3:1.

The coulombic efficiency is a ratio of the charge out of the battery during discharge to the charge put into the battery during charging.

Figure 10B shows the voltage efficiency of a series of batteries over a 200 cycles. Line 1011 corresponds to the voltage efficiency of a battery wherein the anode comprises rGO but no carbon nanohorns. Line 1012 corresponds to the voltage efficiency of a battery wherein the anode comprises carbon nanohorns but not rGO. Line 1013 corresponds to the voltage efficiency of a battery according to the present invention wherein the mass ratio of rGO to carbon nanohorns in the anode is 1:1. Line 1014 corresponds to the voltage efficiency of a battery according to the present invention wherein the mass ratio of rGO to carbon nanohorns in the anode is 1:3. Line 1015 corresponds to the voltage efficiency of a battery according to the present invention wherein the mass ratio of rGO to carbon nanohorns in the anode is 3:1.

The voltage efficiency is a ratio of the voltage of the battery during discharge of the voltage used to charge the battery.

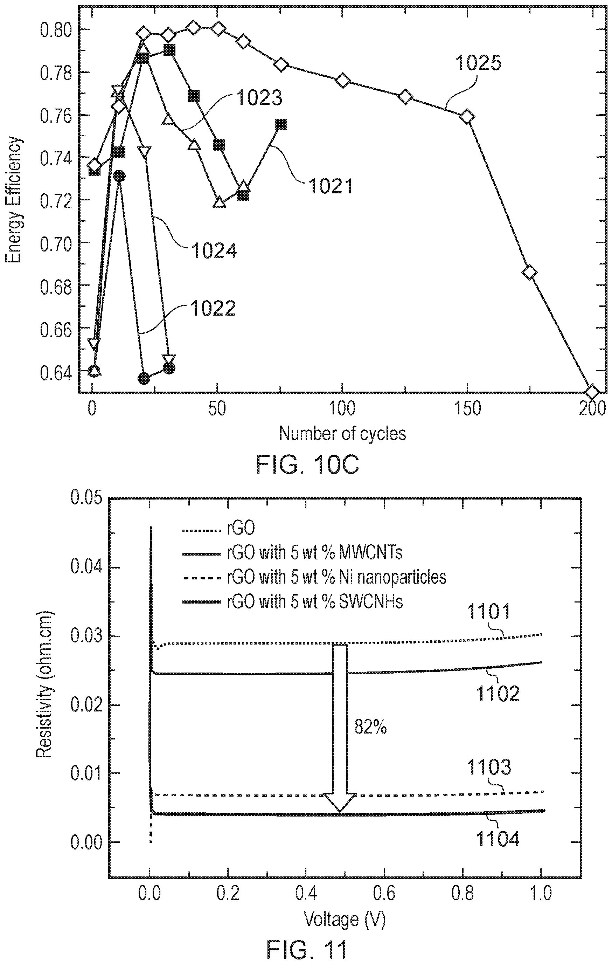

Figure 10C shows the energy efficiency of a series of batteries over a 200 cycles. Line 1021 corresponds to the energy efficiency of a battery wherein the anode comprises rGO but no carbon nanohorns. Line 1022 corresponds to the energy efficiency of a battery wherein the anode comprises carbon nanohorns but not rGO. Line 1023 corresponds to the energy efficiency of a battery according to the present invention wherein the mass ratio of rGO to carbon nanohorns in the anode is 1:1. Line 1024 corresponds to the energy efficiency of a battery according to the present invention wherein the mass ratio of rGO to carbon nanohorns in the anode is 1:3. Line 1025 corresponds to the energy efficiency of a battery according to the present invention wherein the mass ratio of rGO to carbon nanohorns in the anode is 3:1.

The energy efficiency is the ratio of the energy out of a battery during discharge to the energy used to charge the battery.

As can be seen from all of the graphs, the battery having an anode that comprises carbon nanohorns but no rGO performs consistently poorly while the battery that comprises rGO but no carbon nanohorns performs consistently better. However, the battery comprising an anode according to the present invention wherein the mass ratio of rGO to carbon nanohorns in the anode is 3:1 performs considerably better than all of the other batteries tested with, for example, voltage efficiencies of more than 80% until the 150th cycle.

With reference now to the supercapacitor, the current vs. voltage measurements were taken for a series of materials which could be used as electrode materials in supercapacitors, or in other devices with printed electronics, such as sensors or RFID tags.

Figure 11 shows a plot of the resistivity as a function of voltage for these materials. Line 1101 corresponds to an electrode material comprising rGO with no other additives. Line 1102 corresponds to an electrode material comprising rGO with 5 weight percent multi-walled carbon nanotubes. Line 1103 corresponds to an electrode material comprising rGO with 5 weight percent nickel nanoparticles. Line 1104 corresponds to an electrode material comprising rGO with 5 weight percent carbon nanohorns. The carbon nanohorns are single walled carbon nanohorns.

While the addition of both carbon nanotubes and nickel nanoparticles did lower the resistivity of the material, it is clear that the addition of carbon nanohorns to rGO was most effective at reducing the resistivity. The advantage of carbon nanohorns over multi-walled carbon nanotubes can be explained by their different dimensionalities. The one dimensional nature of carbon nanotubes allows the electrical conduction only in one direction while single walled cones of carbon nanohorns facing in all directions form a better conductive network. This could be also attributed to the ease of dispersion of carbon nanohorns between the rGO sheets due to its zero dimensionality.

Various properties of the supercapacitor according to the present invention were evaluated. These properties were competed to those of a supercapacitor wherein the electrodes comprise rGO but no carbon nanohorns.

Supercapacitors according to the present invention were produced using the following method. Graphene ink which comprises about 15 weight percent rGO, along with solvents and one or more binders was mixed with 5 weight percent of carbon nanohorns dispersed in 20 millilitres of isopropanol. The mixture was stirred for 24 hours. The resulting composite carbon ink was printed onto the surface of an aluminium current collector coated with graphite. The printed electrodes were dried at 150°C for 2 hours.

The supercapacitor was then assembled into the supercapacitor shown in Figure 5. Assembly was done in a nitrogen filled glovebox with H₂O and O₂ levels lower that 1 part per million. The resulting supercapacitor was compressed with a pressure of about 6.8 MPa.

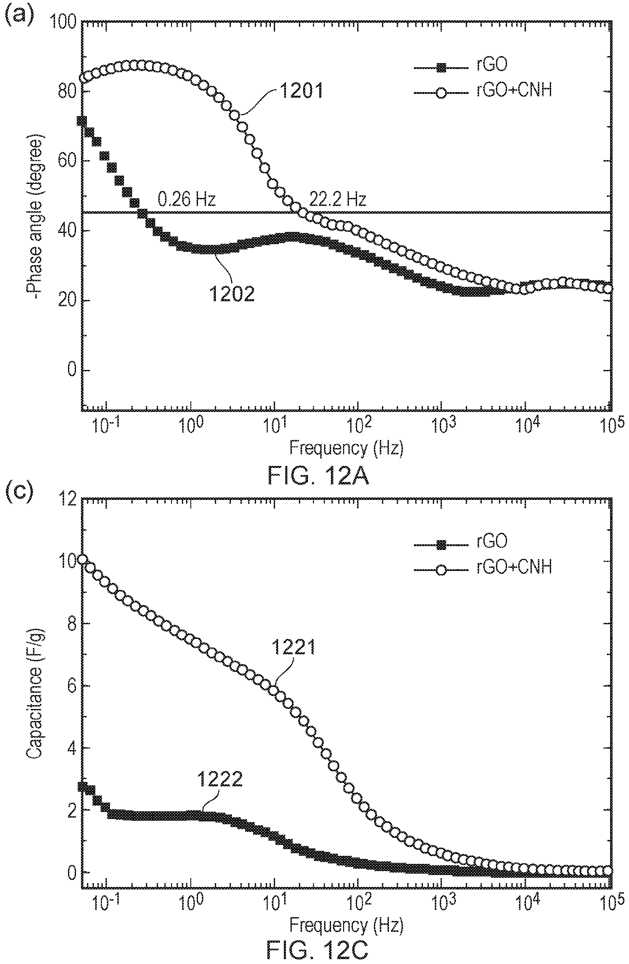

Figure 12A is a bode plot for both a supercapacitor according to the invention (see line 1201) and a supercapacitor having electrodes that comprise rGO but no carbon nanohorns (see line 1202). The bode plot provides an indication of the frequency at which the capacitor can be operated before it switches from capacitive operation to resistive operation. While both supercapacitors exhibit capacitive properties i.e. they are operating near the 90° phase angle, the supercapacitor without the carbon nanohorns falls below the 45° phase angle and into mostly resistive behaviour at 0.26 Hz. By contrast, the supercapacitor of the present invention sustained capacitive behaviour up to 22.2 Hz. This is thought to be due to the improved conductive network in the electrode due to the carbon nanohorns forming conductive bridges between the rGO sheets as well as the increased surface area of the electrode due to the reduced restacking of the rGO.

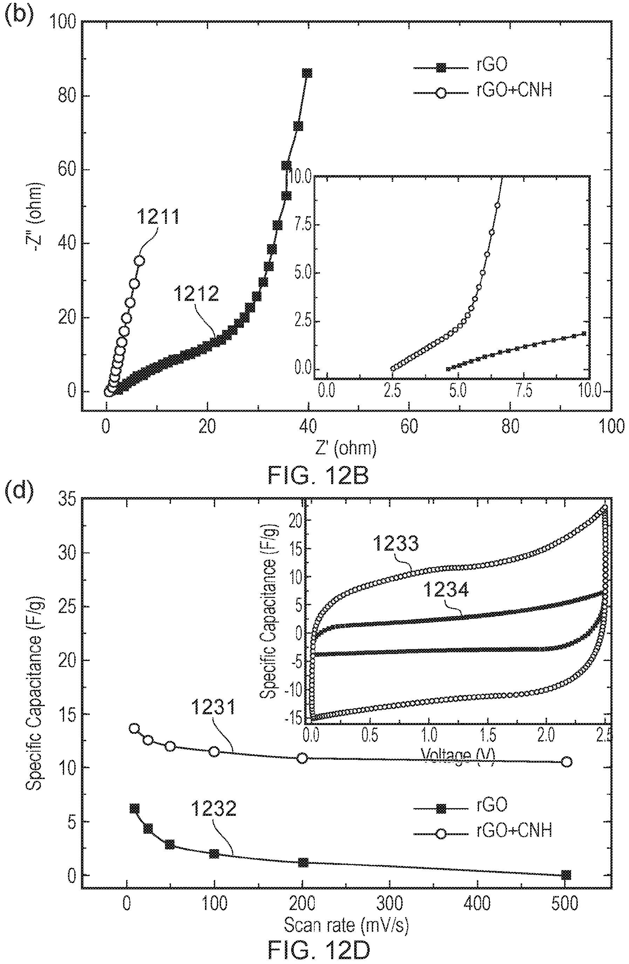

Figure 12B show the impedance spectra of the both a supercapacitor according to the invention (see line 1211) and a supercapacitor having electrodes that comprise rGO but no carbon nanohorns (see line 1212). The impedance spectra were measured from frequencies ranging from 10 kHz to 0.05 Hz. The insert shows the high frequency and low impedance area in detail. Equivalent series resistances were 2.49 Ω for the supercapacitor according to the invention compared with 4.62 Ω for the no carbon nanohorn supercapacitor. There are no features associated with a charge transfer resistance (high-frequency semicircle), which would add series resistance.

Figure 12C shows how the capacitance of the two supercapacitors varied with the frequency of operation. Line 1221 corresponds to the supercapacitor according to the present invention while line 1222 corresponds to supercapacitor having electrodes that comprise rGO but not carbon nanohorns. It was observed that for lower frequency use below about 10 kHz, the capacitor according to the invention preformed significantly better than the capacitor without any carbon nanohorns.

Figure 12D shows the capacitance plotted as a function of scan rate for both a supercapacitor according to the present invention (see line 1231) and a supercapacitor having electrodes that comprise rGO but not carbon nanohorns (see line 1232). A small initial decay can be observed in the capacitors according to the invention, after which the capacitance remains relatively constant at 12 F/g. This would suggest the presence of small pores which are not readily accessible at faster scan rates, but also that there is in addition a significant proportion of easily accessible pores giving the constant capacitance at higher scan rates. This is not the case in the electrodes that do not contain carbon nanohorns as there are no available pores between the rGO sheets for the electrolyte ion to penetrate. As a result, specific capacitance continues to fall at higher scan rates.

Figure 12D insert shows the cyclic voltammograms of a supercapacitor according to the invention (see line 1233) and a supercapacitor having electrodes that comprise rGO but not carbon nanohorns (see line 1234). The cyclic voltammetry was conducted at 0.1 V/s. No obvious Faradaic reactions were observed, although the slope of the curves indicates the presence of some leakage current. The cyclic voltammograms show that the supercapacitor according to the present invention has a higher specific capacitance than the supercapacitor with no carbon nanohorns. This could be attributed to the strong π - π stacking interaction between the rGO and the carbon nanohorns which facilitates fast ion transfer in the composite and reduces the ionic diffusion path. Carbon nanohorns play a key role in tuning the pore structure of the electrode. This allows a higher rate of electrolyte infiltration and facilitate ion insertion/extraction. It is thus hypothesized that the increase in the specific capacitance of the supercapacitor according to the present invention over the supercapacitor with no carbon nanohorns arises due to the increased accessible surface area of the rGO sheets caused by the intercalation of the carbon nanohorn agglomerates between the sheets of rGO.

The specific embodiments and examples described above illustrate but do not limit the invention. It is to be understood that other embodiments of the invention may be made and the specific embodiments and examples described herein are not exhaustive.

## Claims

1. A battery (400) comprising:
an anode (300) and a cathode (401), and
an electrolyte disposed between the anode and the cathode,
wherein one or both of the anode (300) and the cathode (401) comprises an electrode comprising a plurality of sheets of graphene (101) and a plurality of carbon nanohorns disposed between adjacent sheets (101) and further comprises zinc particles (301) that have a diameter of less than 100 nanometres.

2. A battery (400) according to claim 1, wherein the carbon nanohorns are arranged in a plurality of carbon nanohorn agglomerates (102).

3. A battery (400) according to claim 1 or claim 2, wherein one or more of the plurality of sheets (101) is a sheet of reduced graphene oxide.

4. A battery (400) according to any preceding claim, wherein the mass ratio of the plurality of carbon nanohorns to the mass of the plurality of sheets of graphene in the electrode is between 0.25 and 0.5, preferably between 0.3 and 0.4, more preferably 1:3.

5. A battery (400) according to any preceding claim further comprising a binder by which the plurality of sheets of graphene (101) and the plurality of carbon nanohorns are held in position.

6. A battery (400) according to any preceding claim, wherein the plurality of carbon nanohorns each have a length of from 30 to 50 nanometres.

7. A battery (400) according to any preceding claim, wherein the graphene sheets (101) each have a specific surface area of between 500 m²/g and 2200 m²/g.

8. A battery (400) according to any preceding claim, further comprising one or more current collectors (404, 405), the one or more current collectors (404, 405) each comprising a plurality of sheets of graphene and a plurality of carbon nanohorns disposed between adjacent sheets, the one or more current collectors (404, 405) being electrically connected to one or both of the anode (300) and the cathode (401).

9. A battery (400) according to any preceding claim, wherein the electrolyte comprises an alkali or a neutral salt solution.

10. A conductive ink for forming an electrode of a battery (400) according to any one of claims 1 to 9, the conductive ink comprising an active material, a binder, a solvent, a plurality of graphene sheets (101) and a plurality of carbon nanohorns and further comprising zinc particles (301) that have a diameter of less than 100 nanometres.

## Patentansprüche

1. Batterie (400), die Folgendes beinhaltet:
eine Anode (300) und eine Kathode (401) und
einen Elektrolyten, der sich zwischen der Anode und der Kathode befindet,
wobei die Anode (300) oder die Kathode (401) oder beide eine Elektrode beinhalten, die eine Vielzahl von Blättchen aus Graphen (101) und eine Vielzahl von Kohlenstoff-Nanohörnern, die sich zwischen benachbarten Blättchen (101) befinden, beinhaltet und ferner Zinkpartikel (301) beinhaltet, die einen Durchmesser von weniger als 100 Nanometern haben.

2. Batterie (400) nach Anspruch 1, wobei die Kohlenstoff-Nanohörner in einer Vielzahl von Kohlenstoff-Nanohorn-Agglomeraten (102) angeordnet sind.

3. Batterie (400) nach Anspruch 1 oder Anspruch 2, wobei ein oder mehr der Vielzahl von Blättchen (101) ein Blättchen aus reduziertem Graphenoxid sind.

4. Batterie (400) nach einem der vorhergehenden Ansprüche, wobei das Masseverhältnis der Vielzahl von Kohlenstoff-Nanohörnern zur Masse der Vielzahl von Blättchen aus Graphen in der Elektrode zwischen 0,25 und 0,5, vorzugsweise zwischen 0,3 und 0,4, mehr vorzugsweise 1:3 beträgt.

5. Batterie (400) nach einem der vorhergehenden Ansprüche, die ferner ein Bindemittel beinhaltet, durch das die Vielzahl von Blättchen aus Graphen (101) und die Vielzahl von Kohlenstoff-Nanohörnern in Solllage gehalten werden.

6. Batterie (400) nach einem der vorhergehenden Ansprüche, wobei die Vielzahl von Kohlenstoff-Nanohörnern jeweils eine Länge von 30 bis 50 Nanometern haben.

7. Batterie (400) nach einem der vorhergehenden Ansprüche, wobei die Graphenblättchen (101) jeweils eine spezifische Oberfläche zwischen 500 m²/g und 2200 m²/g haben.

8. Batterie (400) nach einem der vorhergehenden Ansprüche, die ferner ein oder mehr Stromabnehmer (404, 405) beinhaltet, wobei die ein oder mehr Stromabnehmer (404, 405) jeweils eine Vielzahl von Blättchen aus Graphen und eine Vielzahl von Kohlenstoff-Nanohörnern, die sich zwischen benachbarten Blättchen befinden, beinhalten, wobei die ein oder mehr Stromabnehmer (404, 405) elektrisch mit der Anode (300) oder der Kathode (401) oder beiden verbunden sind.

9. Batterie (400) nach einem der vorhergehenden Ansprüche, wobei der Elektrolyt ein Alkali oder eine neutrale Salzlösung beinhaltet.

10. Leitfähige Tinte zum Bilden einer Elektrode einer Batterie (400) nach einem der Ansprüche 1 bis 9, wobei die leitfähige Tinte ein Aktivmaterial, ein Bindemittel, ein Lösungsmittel, eine Vielzahl von Graphenblättchen (101) und eine Vielzahl von Kohlenstoff-Nanohörnern beinhaltet und ferner Zinkpartikel (301) beinhaltet, die einen Durchmesser von weniger als 100 Nanometern haben.

## Revendications

1. Pile (400) comprenant :
une anode (300) et une cathode (401), et
un électrolyte disposé entre l'anode et la cathode,
dans laquelle l'une d'entre l'anode (300) et la cathode (401) ou les deux comprennent une électrode comprenant une pluralité de feuilles de graphène (101) et une pluralité de nanocomets de carbone disposés entre des feuilles adjacentes (101) et comprennent en outre des particules de zinc (301) qui ont un diamètre de moins de 100 nanomètres.

2. Pile (400) selon la revendication 1, dans laquelle les nanocornets de carbone sont arrangés en une pluralité d'agglomérats de nanocomets de carbone (102).

3. Pile (400) selon la revendication 1 ou la revendication 2, dans laquelle l'une ou plusieurs de la pluralité de feuilles (101) est une feuille d'oxyde de graphène réduit.

4. Pile (400) selon l'une quelconque des revendications précédentes, dans laquelle le rapport de masse de la pluralité de nanocornets de carbone à la masse de la pluralité de feuilles de graphène dans l'électrode est d'entre 0,25 et 0,5, de préférence d'entre 0,3 et 0,4, plus préférentiellement de 1:3.

5. Pile (400) selon l'une quelconque des revendications précédentes comprenant en outre un liant grâce auquel la pluralité de feuilles de graphène (101) et la pluralité de nanocomets de carbone sont tenus en position.

6. Pile (400) selon l'une quelconque des revendications précédentes, dans laquelle la pluralité de nanocomets de carbone ont chacun une longueur de 30 à 50 nanomètres.

7. Pile (400) selon l'une quelconque des revendications précédentes, dans laquelle les feuilles de graphène (101) ont chacune une aire de surface spécifique d'entre 500 m²/g et 2200 m²/g.

8. Pile (400) selon l'une quelconque des revendications précédentes, comprenant en outre un ou plusieurs collecteurs de courant (404, 405), l'un ou les plusieurs collecteurs de courant (404, 405) comprennent chacun une pluralité de feuilles de graphène et une pluralité de nanocomets de carbone disposés entre des feuilles adjacentes, l'un ou les plusieurs collecteurs de courant (404, 405) étant connectés électriquement à l'une de l'anode (300) et de la cathode (401) ou aux deux.

9. Pile (400) selon l'une quelconque des revendications précédentes, dans laquelle l'électrolyte comprend un alcali ou une solution de sel neutre.

10. Encre conductrice pour former une électrode dans une pile (400) selon l'une quelconque des revendications 1 à 9, l'encre conductrice comprenant un matériau actif, un liant, un solvant, une pluralité de feuilles de graphène (101) et une pluralité de nanocomets de carbone et comprenant en outre des particules de zinc (301) qui ont un diamètre de moins de 100 nanomètres.
